# EUROPÄISCHE PATENTSCHRIFT

(11) **EP 2 327 492 B1**
(45) Veröffentlichungstag und Bekanntmachung des Hinweises auf die Patenterteilung: **22.01.2014**
(21) Anmeldenummer: 10192371.2
(22) Anmeldetag: 24.11.2010
(51) Int. Cl.: B21K 5/04, B23B 51/02

(54) **Verfahren zur Herstellung eines drei- und mehrspiraligen Bohrers**
Method for manufacturing a three and more spiral drill
Procédé de fabrication d´un foreur à trois ou plus spirales

(30) Priorität: 26.11.2009 DE 102009055746
(43) Veröffentlichungstag der Anmeldung: 01.06.2011
(73) Patentinhaber: Mac Panther GmbH, 28199 Bremen (DE)
(72) Erfinder:
(74) Vertreter: Eisenführ Speiser

(56) Entgegenhaltungen:
- WO-A1-2005/030418
- DE-A1- 10 144 241
- DE-U1- 20 304 580
- FR-A- 959 118
- GB-A- 273 543
- US-A- 1 578 543
- US-A- 1 711 231

## Beschreibung

Die Erfindung betrifft ein Verfahren zur Herstellung eines drei- und mehrspiraligen Bohrers, insbesondere eines drei- und mehrspiraligen Bohrers für Akkuschrauber, Bohrhämmer, Elektroschrauber, Schlagbohrmaschinen, Drehbohrmaschinen und Kombinationen derselben, mit einem Schaftbereich zum Einspannen des Bohrers und mit einem, mindestens drei wendelförmig ausgebildete Nuten aufweisenden, Bohrkopf, insbesondere mit einem Schneidenteil aus härterem Material wobei die Nuten des Bohrkopfes durch Kalt- und/oder Warmumformung eines Drahtabschnittes in Umformmatrizen einer Umformmaschine gebildet werden.

Bohrer und Verfahren der eingangs genannten Art sind aus dem Stand der Technik bekannt. Insbesondere ist benannt, dass Bohrer Nuten zur Bohrmehlab-fuhr aufweisen. FR 959 118 A beschreibt ein gattungsgemäßes Verfahren und eine Vorrichtung zur Herstellung von Nuten, insbesondere von Werkzeugen mit Nuten.

Aufgabe der vorliegenden Erfindung ist es, Verfahren der eingangs genannten Art zu verbessern.

Diese Aufgabe wird durch den Gegenstand des unabhängigen Anspruchs 1 gelöst.

Unter dem Begriff "drei- und mehrspiralig" wird im Zusammenhang mit der vorliegenden Erfindung verstanden, dass der Bohrer entweder drei oder mehr als drei Spiralen oder Nuten aufweist.

Die vorliegende Erfindung schließt insbesondere die Erkenntnis ein, dass das Einbringen von drei oder mehr wendelförmig angeordneten Nuten durch Massivumformung in einen für den Bohrkopf vorgesehenen Bereich überraschend deutlich weniger Umformarbeit erfordert, als bei weniger als drei Nuten, da bei drei oder mehr Nuten der Steigungswinkel und auch der Nutenquerschnitt deutlich kleiner sind als bei weniger als drei Nuten. Dies gilt vor allen Dingen dann, wenn diese Umformung in einem Arbeitsgang durchgeführt wird. Die Erfindung stellt somit erstmalig die Erkenntnis zur Verfügung, einen solchen Bohrer durch Kalt-und/oder Warmumformung eines entsprechenden Drahtabschnittes oder Bohrerhalbzeuges in Umformmatrizen einer Umformmaschine herzustellen.

Die vorliegende Erfindung schließt auch die Erkenntnis ein, dass es zwar bekannt ist, eine oder zwei Nuten in den Bohrkopf durch Massivumformung mittels einer Umformmatrize auf einer Umformmaschine einzuformen, es sich jedoch gezeigt hat, dass - insbesondere wenn dabei gleichzeitig eine Reduzierung des Ausgangsdurchmessers des Drahtabschnittes über einen Teil der Drahtabschnittslänge erfolgen soll, wie dieses etwa bei SDSplus® -Bohrern erforderlich ist - das Verfahren, wenn überhaupt, nur für einen Bohrerdurchmesser funktioniert, der in etwa dem Drahtausgangsdurchmesser entspricht.

Besonders vorteilhaft bei der vorliegenden Erfindung ist es, dass trotz drei oder mehr spiralförmigen Nuten im Bohrkopf auf den aufwendigen, da zeitraubenden und materialverschwendenden Schritt des spanenden Einbringens der spiralförmigen Nuten in den Bohrkopf verzichtet werden kann. Dies stellt einen ganz erheblichen zeit- und Kostenvorteil bei der Herstellung des erfindungsgemäßen Bohrers dar, denn ein solcher Bohrer ist ein Verschleißartikel, bei dem es ganz entscheidend auf den Herstellungspreis ankommt.

Genauso vorteilhaft ist die vorliegende Erfindung auch gegenüber dem bekannten Rollwalzen von drei oder vier Nuten in das vorher gefertigte Bohrerhalbzeug. Dies ist wiederum von großer Bedeutung für den Zeit- und Kostenaufwand bei der Herstellung, da beim Rollwalzen eine Durchmesservergrößerung eintritt und daher bspw. für einen Hammerbohrerrohling mit einem Durchmesser von 4,8 mm ein Bohrerhalbzeug mit einem Durchmesser von nur 4,2 mm benötigt wird. Deshalb muss vor dem Rollwalzen das Bohrerhalbzeug geglüht werden, damit das Material beim Walzen nicht reißt. Somit sind bei dem Verfahren des Rollwalzens die Schritte Pressen des Halbzeuges, Glühen und Rollwalzen zur Erzeugung eines Bohrerrohlings mit Spiralen erforderlich, während bei dem erfindungsgemäßen Verfahren dieses in nur einem Schritt erfolgt. Vor allem hat das bekannte Rollwalzen auch den großen Nachteil, dass der fertige Bohrer im Bereich zwischen Schaftbereich und Bohrkopf einen geringeren Durchmesser und somit eine Schwachstelle aufweist, an der der Bohrer brechen kann.

Alle vorgenannten, von der vorliegenden Erfindung erkannten Nachteile werden durch das Verfahren der vorliegenden Erfindung vermieden.

Besonders bevorzugt ist es, dass mindestens zwei der mindestens drei Nuten einen unterschiedlichen Querschnitt aufweisen.

Besonders bevorzugt ist es, dass mindestens zwei der mindestens drei Nuten eine unterschiedliche Tiefe aufweisen.

Besonders bevorzugt ist es, dass mindestens zwei von die Nuten gegeneinander abgrenzenden Stegen unterschiedliche Außendurchmesser aufweisen.

Erfindungsgemäß weisen die Nuten eine Steigung von 20 Grad bis 50 Grad, bevorzugt von 30 Grad bis 45 Grad, auf. Die vorgenannten Steigungen von 20 Grad bis 50 Grad, ganz besonders jedoch die vorgenannten Steigungen von 30 Grad bis 45 Grad ermöglichen die Überwindung der eingangs genannten Nachteile und Probleme des Standes der Technik und ermöglichen vor allen Dingen die problemlose Herstellung derartiger Nuten durch Kalt- und/oder Warmumformung eines entsprechenden Drahtes oder Bohrerhalbzeuges in Umformmatrizen. Denn es hat sich herausgestellt, dass insbesondere bei den vorgenannten Steigungen von 20 Grad bis 50 Grad, ganz besonders jedoch bei den vorgenannten Steigungen von 30 Grad bis 45 Grad, keine Schwächung oder Beschädigung des Materials, insbesondere keinerlei Reißen des Materials bei den vorgenannten Umformarten der vorliegenden Erfindung zu befürchten ist, so dass vollständig auf das im Stand der Technik notwendige Erwärmen oder Vorglühen des Halbzeuges verzichtet werden kann. Bei kleineren Steigungen als 20 Grad leidet die Funktion der Nuten für den Spänetransport und bei größeren Steigungen als 50 Grad steigt die Belastung der Umformmatrize derart an, dass diese übermäßig verschleißt oder bricht.

Darüber hinaus umfasst die vorliegende Erfindung auch die Erkenntnis, dass bei Bohrern größeren Durchmessers, beispielsweise bei Bohrern mit einem Durchmesser von mehr als 8 mm, ein größerer Steigungswinkel zu bevorzugen ist, als bei Bohrern kleineren Durchmessers. Insoweit umfasst die vorliegende Erfindung insbesondere die Erkenntnis, dass Steigungen von mehr als 35 Grad besonders für Bohrer mit einem Durchmesser von mehr als 8 mm geeignet sind, während Steigungen von kleiner als 35 Grad besonders für Bohrer mit einem Durchmesser von weniger als 8 mm geeignet sind.

Bevorzugt ist, dass der maximale Außendurchmesser des Schaftbereiches im wesentlichen, bevorzugt genau, dem maximalen Außendurchmesser des Bohrkopfes entspricht.

Bevorzugt ist auch, dass der maximale Außendurchmesser des Bohrers zwischen Schaftbereich und Bohrkopf im Wesentlichen, bevorzugt genau, dem maximalen Außendurchmesser des Bohrkopfes entspricht.

Ebenfalls bevorzugt ist, dass der Schaftbereich und der Bohrkopf, bevorzugt der gesamte Bohrer, einteilig und/oder aus einem Teil hergestellt sind.

Bevorzugt ist, dass der Schaftbereich als 1/4-Zoll-Bitantrieb ausgebildet ist.

Bevorzugt ist, dass der Schaftbereich DIN 3126 - E.6.3 entspricht.

Weiterhin bevorzugt ist, dass zumindest der Bohrkopf, bevorzugt der Bohrkopf und der Schaftbereich, weiter bevorzugt der ganze Bohrer, aus legiertem Kaltumformstahl hergestellt ist.

Auch bevorzugt ist, dass der maximale Außendurchmesser des Bohrers 16 mm beträgt.

Bei dem erfindungsgemäßen Verfahren ist bevorzugt, dass die Nuten in einem Arbeitsgang eingebracht werden.

Bei dem erfindungsgemäßen Verfahren ist bevorzugt, dass die Nuten ohne Fräsen und/oder ohne Walzen hergestellt werden.

Bei dem erfindungsgemäßen Verfahren ist bevorzugt, dass die Nuten durch Warmumformung unterhalb der Verzunderungstemperatur hergestellt werden.

Ganz besonders ist es bei dem erfindungsgemäßen Verfahren bevorzugt, dass die Nuten ausschließlich durch Kaltumformung hergestellt werden, insbesonderre auch ohne Vorglühen hergestellt werden.

Bei dem erfindungsgemäßen Verfahren ist bevorzugt, dass die Bildung der Nuten gleichzeitig mit einem Reduzieren des Ausgangsdurchmessers des Drahtabschnittes über einen Teil der Drahtabschnittslänge vorgenommen wird.

Weitere bevorzugte Ausführungsformen sind in den Unteransprüchen angegeben.

Im Folgenden wird nun anhand der Zeichnungen eine bevorzugte Ausführungsform der Erfindung beschrieben. Dabei werden gleiche, ähnliche oder funktionsgleiche Teile mit den gleichen Bezugszeichen bezeichnet. Die Zeichnung zeigt:
Fig. 1 zeigt jeweils in perspektivischer Ansicht eine erste und eine zweite Ausführungsform eines mit dem erfindungsgemäßen Verfahren herstellbaren Bohrers;
Fig. 2 zeigt einen vergrößerten Ausschnitt der Figur 1; und
Fig. 3 zeigt jeweils in perspektivischer Ansicht Bohrköpfe einer dritten und vierten Ausführungsform mit dem erfindungsgemäßen Verfahren herstellbaren Bohrers.

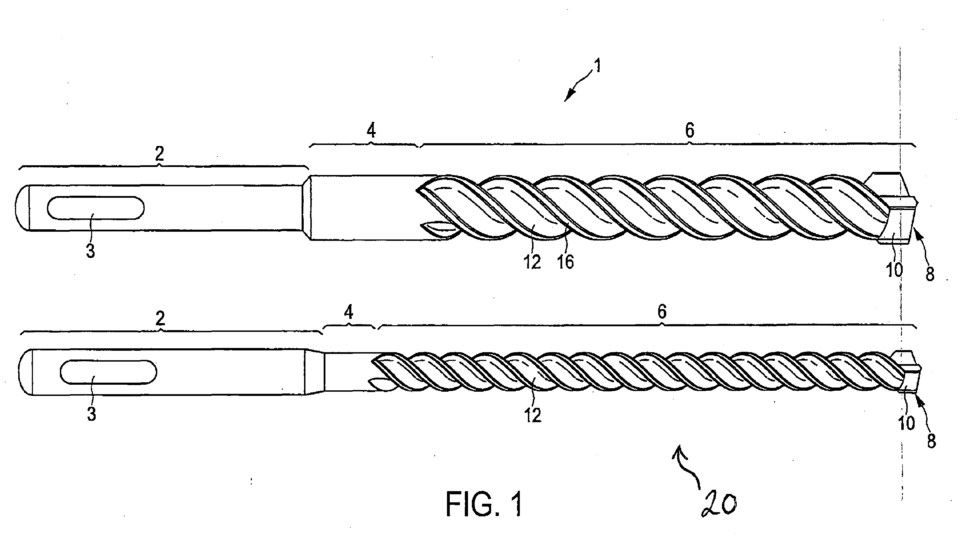

Figur 1 zeigt jeweils in perspektivischer Ansicht eine erste und eine zweite Ausführungsform eines Bohrers. Die in der Figur 1 oben dargestellte erste Ausführungsform zeigt einen vierspiraligen Bohrer 1, geeignet für Akkuschrauber, Bohrhämmer, Elektroschrauber, Schlagbohrmaschinen oder Drehbohrmaschinen. Bohrer 1 weist einen Schaftbereich 2 zum Einspannen des Bohrers 1 auf. Der Schaftbereich weist parallel zur Längsachse verlaufende Ausnehmungen 3 auf, um den Bohrer 1 einzuspannen, wie er als SDSplus®-Einspannschaft bekannt ist. Im Anschluss an den Schaftbereich 2 ist ein Übergangsbereich 4 vorgesehen. Im Anschluss an den Übergangsbereich 4 weist der Bohrer 1 einen Bohrkopf 6 mit dem gleichen Außendurchmesser, wie der Übergangsbereich 4 auf. Der Bohrkopf 6 trägt an seinem Ende eine vier rechtwinklig zueinander angeordnete Schneiden 8 aufweisende Spitze 10 aus einem härteren Schneidenmaterial.

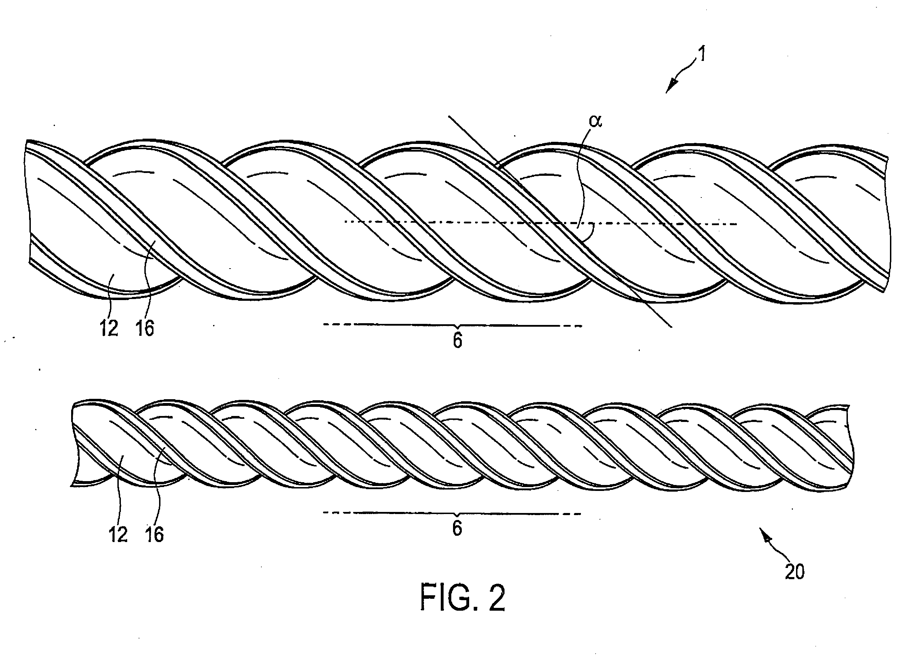

Der Bohrkopf 6 weist vier wendelförmig ausgebildete Nuten 12 auf. Die Nuten 12 wurden durch Kaltumformung eines Drahtes hergestellt. Wie aus der vergrößerten Darstellung des Bohrkopfs 6 in der Figur 2 zu erkennen ist, weisen die Nuten eine Steigung *α* auf. Diese beträgt bei der in den Figuren 1 und 2 dargestellten ersten Ausführungsform etwa 45 Grad. Bei anderen, nicht dargestellten Ausführungsformen des Bohrers 1 kann die Steigung *α* jedoch auch Werte zwischen 20 und 50 Grad annehmen.

Der Schaftbereich 2 des Bohrers 1 kann als 1/4-Zoll-Bitantrieb ausgebildet sein.

Der Schaftbereich 2 des Bohrers 1 kann der DIN 3126-E.6.3 entsprechen.

Der Bohrer 1 der ersten Ausführungsform ist durch das erfindungsgemäße Verfahren mittels Kaltumformung hergestellt worden. Dabei sind die Nuten in einem Arbeitsgang ohne Fräsen, ohne Walzen, ohne Vorglühen und ohne Erwärmen hergestellt worden.

Die in der Figur 1 unten dargestellte zweite Ausführungsform zeigt einen Bohrer 20. Bei dem Bohrer 20 sind in Bezug auf die erste Ausführungsform gleiche oder funktionsgleiche Teile mit demselben Bezugszeichen bezeichnet. Der Bohrer 20 unterscheidet sich von dem Bohrer 1 im Wesentlichen nur dadurch, dass der Außendurchmesser und der Übergangsbereich 4 des Bohrkopfes 6 nicht wie bei dem Bohrer 1 größer sind als der Schaft 2, sondern vielmehr deutlich kleiner sind als der Schaftbereich 2.

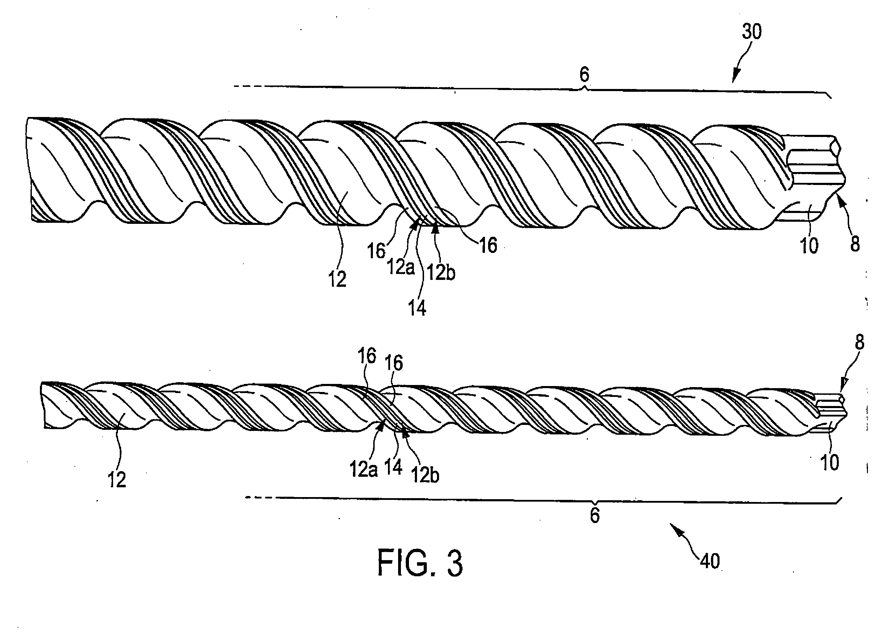

Figur 3 zeigt jeweils in perspektivischer Ansicht Bohrköpfe einer dritten und vierten Ausführungsform des Bohrers. Die in der Figur 3 oben dargestellte dritte Ausführungsform zeigt einen Bohrer 30. In Bezug auf die erste Ausführungsform gleiche oder funktionsgleiche Teile sind mit denselben Bezugszeichen bezeichnet. Im Gegensatz zu den ersten beiden Ausführungsformen der Figuren 1 und 2 ist bei der dritten Ausführungsform gemäß Bohrer 30 eine große, d.h. breite und tiefe Nut 12 vorgesehen, während zwischen dieser Nut 12 mit großem Querschnitt zwei kleine Nuten 12a und 12b verlaufen, die jeweils sehr flach und sehr schmal sind. Die Nuten 12a und 12b mit kleinem Querschnitt sind durch einen Steg 14 voneinander getrennt, der einen etwas, d.h. etwa um 1 mm, kleineren Außendurchmesser aufweist, als ein die großen Nuten jeweils begrenzender Steg 16.Die in der Figur 3 unten dargestellte vierte Ausführungsform zeigt einen Bohrer 40. Bei dem Bohrer 40 sind in Bezug auf die erste Ausführungsform gleiche oder funktionsgleiche Teile mit demselben Bezugszeichen bezeichnet. Der Bohrer 40 unterscheidet sich von dem Bohrer 30 im Wesentlichen nur dadurch, dass der Außendurchmesser des Bohrkopfes 6 kleiner ist.

## Patentansprüche

1. Verfahren zur Herstellung eines drei- und mehrspiraligen Bohrers (1, 20, 30, 40), insbesondere eines drei- und mehrspiraligen Bohrers (1, 20, 30, 40) für Akkuschrauber, Bohrhämmer, Elektroschrauber, Schlagbohrmaschinen, Drehbohrmaschinen und Kombinationen derselben, mit einem Schaftbereich (2) zum Einspannen des Bohrers (1, 20, 30, 40), und mit einem, mindestens drei wendelförmig ausgebildete Nuten (12) aufweisenden, Bohrkopf (6), bevorzugt mit einem Schneidenteil aus härterem Material,
wobei die Nuten (12) des Bohrkopfes (6) durch Kalt-und/oder Warmumformung eines Drahtabschnittes in Umformmatrizen einer Umformmaschine gebildet werden,
**dadurch gekennzeichnet, dass** die Nuten (12) eine Steigung (α) von 20 Grad bis 50 Grad aufweisen.

2. Verfahren nach Anspruch 1,
wobei mindestens zwei der mindestens drei Nuten (12) einen unterschiedlichen Querschnitt aufweisen,
wobei bevorzugt mindestens zwei der mindestens drei Nuten (12) eine unterschiedliche Tiefe aufweisen,
wobei bevorzugt mindestens zwei von die Nuten (12) gegeneinander abgrenzenden Stegen (14, 16) unterschiedliche Außendurchmesser aufweisen.

3. Verfahren nach einem der Ansprüche 1 oder 2,
wobei die Nuten (12) eine Steigung (α) von 30 Grad bis 45 Grad aufweisen.

4. Verfahren nach einem der vorstehenden Ansprüche 1 bis 3,
wobei die Nuten (12) in einem Arbeitsgang eingebracht werden.

5. Verfahren nach einem der Ansprüche 1 bis 4,
wobei die Nuten (12) durch Warmumformung unterhalb der Verzunderungstemperatur hergestellt werden.

6. Verfahren nach einem der Ansprüche 1 bis 4,
wobei die Nuten (12) ausschließlich durch Kaltumformung hergestellt werden, insbesondere auch ohne Vorglühen hergestellt werden.

7. Verfahren nach einem der Ansprüche 1 bis 6,
wobei die Bildung der Nuten (12) gleichzeitig mit einem Reduzieren des Ausgangsdurchmessers des Drahtabschnittes über einen Teil der Drahtabschnittslänge vorgenommen wird.

## Claims

1. Method for manufacturing a three-spiral and multi-spiral drill (1, 20, 30, 40), in particular a three-spiral and multi-spiral drill (1, 20, 30, 40) for cordless drills, hammer drills, electric screwdrivers, percussion drills, drilling rigs and combinations thereof, having a shaft area (2) for clamping the drill (1, 20, 30, 40), and a drill head (6) having at least three spiral-shaped grooves (12), preferably with a cutting part made of hard material, wherein the grooves (12) of the drill head (6) are formed by cold forming and/or hot forming of a wire section in a forming matrix of a forming machine, **characterised in that** the grooves (12) have a pitch (α) of between 20 degrees and 50 degrees.

2. Method according to claim 1, wherein at least two of the at least three grooves (12) have different cross sections, wherein preferably at least two of the at least three grooves (12) have different depths, wherein preferably at least two of the grooves (12) have delimiting bars (14, 16) of different external diameters.

3. Method according to any one of claims 1 or 2, wherein the grooves have a pitch (α) of between 30 degrees and 45 degrees.

4. Method according to any one of the previous claims 1 to 3, wherein the grooves (12) are created in a single production step.

5. Method according to any one of claims 1 to 4, wherein the grooves (12) are produced by hot forming below the scaling temperature.

6. Method according to any one of claims 1 to 4, wherein the grooves (12) are produced exclusively by cold forming, in particular also without preheating.

7. Method according to any one of claims 1 to 6, wherein the formation of the grooves (12) is performed simultaneously with a reduction in the initial diameter of the wire section over part of the wire section length.

## Revendications

1. Procédé de fabrication d'un foret (1, 20, 30, 40) à trois spirales ou plus, notamment d'un foret (1, 20, 30, 40) à trois spirales ou plus pour des visseuses sans fil, des marteaux perforateurs, des tournevis électriques, des perceuses électriques à percussion, des perforatrices rotatives et des combinaisons de ceux-ci, avec une zone de queue (2) pour le serrage du foret (1, 20, 30, 40) et avec une tête de forage (6) présentant au moins trois rainures (12) réalisées de manière hélicoïdale, de préférence avec une partie de coupe en matériau plus dur,
les rainures (12) de la tête de forage (6) étant formées par formage à froid et/ou à chaud d'une section de fil métallique dans des matrices de formage d'une machine de formage,
**caractérisé en ce que** les rainures (12) présentent un pas (α) de 20 à 50 degrés.

2. Procédé selon la revendication 1, dans lequel
au moins deux des au moins trois rainures (12) présentent une section transversale différente,
de préférence dans lequel au moins deux des au moins trois rainures (12) présentent une profondeur différente,
de préférence dans lequel au moins deux des traverses (14, 16) délimitant les rainures (12) l'une contre l'autre présentent des diamètres extérieurs différents.

3. Procédé selon l'une quelconque des revendications 1 ou 2,
dans lequel les rainures (12) présentent un pas (α) de 30 à 45 degrés.

4. Procédé selon l'une quelconque des revendications 1 à 3,
dans lequel les rainures (12) sont réalisées en une opération.

5. Procédé selon l'une quelconque des revendications 1 à 4,
dans lequel les rainures (12) sont fabriquées par formage à chaud sous la température de calaminage.

6. Procédé selon l'une quelconque des revendications 1 à 4,
dans lequel les rainures (12) sont exclusivement fabriquées par formage à froid, notamment aussi sans recuit préalable.

7. Procédé selon l'une quelconque des revendications 1 à 6,
dans lequel la formation des rainures (12) est entreprise simultanément à une réduction du diamètre de sortie de la section de fil métallique sur une partie de la longueur de la section de fil métallique.
